# EUROPEAN PATENT SPECIFICATION

(11) **EP 2 836 449 B1**
(45) Date of publication and mention of the grant of the patent: **28.11.2018**
(21) Application number: 13775135.0
(22) Date of filing: 03.04.2013
(51) Int. Cl.: B65G 69/20, B60S 3/04

(54) **DEVICE AND METHOD FOR DE-ICING RAILWAY TRUCKS AND ORE CONCENTRATE IN RAILWAY TRUCKS**
VORRICHTUNG UND VERFAHREN ZUM ENTEISEN VON EISENBAHNWAGGONS UND ERZKONZENTRATEN IN EISENBAHNWAGGONS
DISPOSITIF ET PROCÉDÉ POUR DÉGIVRER DES CHARIOTS SUR RAIL ET UN CONCENTRÉ DE MINERAI DANS LES CHARIOTS

(30) Priority: 10.04.2012 SE 1250356
(43) Date of publication of application: 18.02.2015
(73) Proprietor: EPN Solutions AB, 941 52 Piteå (SE)
(72) Inventor: GRANSTRÖM, Staffan, S-941 32 Piteå (SE); JOHANSSON, Owe, S-975 95 Luleå (SE)
(74) Representative: Groth & Co. KB
(86) International application number: PCT/SE2013/050365
(87) International publication number: WO 2013/154486

(56) References cited:
- CN-U- 202 054 463
- DD-A1- 152 113
- DD-B5- 266 552
- DE-A1- 19 828 899
- DE-A1- 19 921 083
- RU-C1- 2 025 430
- SU-A1- 541 753
- SU-A1- 897 681
- SU-A1- 1 017 628
- SU-A1- 1 574 517
- US-A- 1 443 329
- US-A- 1 443 329

## Description

### Field of the Invention

The present invention relates, in a first aspect, to a device for de-icing railway trucks and/or dressed ore in railway trucks.

In a second aspect, the invention concerns a method for such de-icing.

### Background of the Invention

De-icing of railway trucks and dressed ore in railway trucks is a process that is intricate, energy demanding and has environmental impact aspects. Examples of known processes for this are disclosed, for instance, in US 2449932, US 2507775, US 4683870, DE 19828899, DE 19921083, DD 152113, and RU2025430. However, known plants can only to a limited extent meet the requirements of rational and energy-efficient de-icing.

### Description of the Invention

The object of the present invention is to overcome the problems associated with traditional methods for de-icing and provide an improved process for this type of de-icing.

According to the invention, from its first aspect, this object is attained by a device of the kind in question having the special features defined in the characterizing clause of claim 1.

From the second aspect of the invention, the object is achieved by a method of the kind in question comprising the special measures defined in the characterizing clause of claim 12.

Preferred embodiments of the invention are defined in the dependent claims. It should be appreciated that further preferred embodiments may consist of each possible combination of features in the dependent claims and each possible combination of these with features that will be clear from the subsequent description including description of examples.

With the concept of tunnel in the present application, reference is made to what is conventionally meant by a tunnel, i.e., a building construction that has side walls, ceiling, and bottom but that is open in each end portion. With railway truck, also locomotives are understood in this application.

### Brief Description of the Figures

Fig. 1 is a flow chart of de-icing of railway trucks and locomotives.
Fig. 2 shows a locomotive and the principle of the injection of hot air and evacuation of cold air.
Fig. 3 shows in a diagram the principle of control and monitoring.
Fig. 4 shows a cross section of a tunnel including an ore truck.
Fig. 5 shows IR tiles of ceramic material between slits for the exhaust of hot air at high speed against the outside of the ore truck.

### Description of Embodiment Examples

### De-icing of locomotives and railway trucks

### Brief Functional Description

De-icing of ore concentrate in ore trucks is principally different from thawing of ice on railway trucks.

In de-icing of frozen moisture of ore concentrate, the truck body has to be heated from the outside to thaw a frozen layer of some millimetres for the ore concentrate to release from the wall upon unloading of the ore

In de-icing of railway trucks, the snow and ice caught on the under side of the truck, i.e., bogies and truck chassis, have to be thawed using a hot media, either hot water, steam, or hot air.

### De-icing Using Hot Water

Thawing using hot water is from a heat-transfer point-of-view most efficient, since the heat transfer with water is higher than for, for instance, air. However, de-icing using water has many disadvantages, among others:
- Hot water has to be sprayed by high pressure to reach as large ice-covered surfaces as possible, which gives problems of penetration moisture in truck body, electric and electronic equipment of bogies and truck chassis.
- Too low water temperature < 50 °C together with remains from knocked down animals has turned out to give rise to Legionella bacteria, which requires an expensive and advanced purification of water.
- For a quick de-icing of a train set, an accumulator is required having the size of 1000 m³ or more, which takes time to heat up. To heat 1 m³ of water from 40 to 60 °C in 1 h, a power of approx. 23,2 kW is required. To heat 1000 m³ of water 20 °C, an installed power of approx. 23 MW is required, which, however, is possible with access to district heating or with electric energy

### De-icing Using Hot Air

De-icing using hot air gives a lower heat-transfer coefficient than water, which has to be compensated by higher temperature and air speed (flow). However, the air temperature has to be limited so that ice-free surfaces do not become overheated during the period for the thawing of ice-covered surfaces.

By injection of water that is evaporated in hot air into steam, the condensation heat of the steam can be utilized to increase the thawing of ice-covered surfaces, since the temperature of ice-covered surfaces is 0 °C and lower than the dewpoint of hot air.

The air has the advantage over water that it can pass parts being non-accessible also to water and does not give problem of penetration of moisture into electric and electronic equipment of bogies and truck chassis.

Heating of the air can be effected either using liquefied petroleum gas, natural gas, biogas, or oil, which is combusted in a hot-air generator that the air passes through, electric energy or steam.
- Heating using liquefied petroleum gas or natural gas in a hot-air generator gives a compact and low investment plant having a quick start up time, since the energy transfer to the air takes place at high temperature. Heating using liquefied petroleum gas or natural gas gives a large flexibility, since water can be injected into the hot-air current in a relatively easy way.
- Heating using electric energy requires large heat-transferring surfaces between electrically heated elements and the air, since the temperature of the electric heat-transferring elements is limiting.
- Heating of the air using steam gives, like injection of water into hot air, a possibility of utilizing the condensation energy of the steam in the air upon the thawing of ice. The production of steam can be carried out either using combustion of liquefied petroleum gas, natural gas, biogas, or electric energy, but requires however a complicated plant with requirements of water treatment and safety equipment.

### Principle Solution, Flow Chart

For de-icing locomotives and railway trucks, it is suggested, in the circumstances of the above described advantages and disadvantages of different energy models, the use of hot air heated using a combustible gas in a combustion chamber 5 with the possibility of injecting water and utilizing the condensation energy of the steam to decrease the time for de-icing railway trucks.

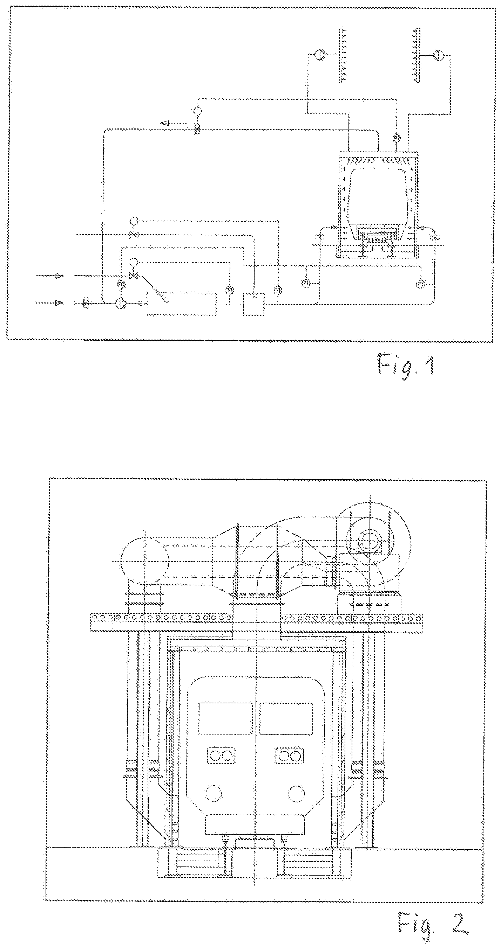

Fig. 1 shows in a flow chart the principle of the proposed plant for de-icing locomotives and railway trucks.

### Brief Description of Plant

According to experience from simulations and plant in operation, the air speed from incoming air should be in the order of 25-30 m/s to give a sufficiently high turbulence and a surface power in the order of 8 000-10 000 W/m². By condensation of injected water in the hot gas, the surface power can be doubled.

A train set 1 including locomotive and trucks passes through a tunnel 2 in which hot air is blown at high speed from longitudinal slits 3 in the lower parts of the tunnel walls and between the rail against the sides and bottom parts of chassis and bogies of locomotive and trucks to which snow and ice are frozen fast. When the air has passed the chassis and bogies, the air passes upward between tunnel walls and truck sides and is sucked through longitudinal slits 4 in the ceiling of the tunnel, after which the cooled air is recirculated through an insulated duct system 7 back to the hot-air generator 5 in order to be reheated. In-leaking ambient air in air curtains in the end portions of the tunnel is diverted from the main flow to air curtains in the in and out passages of the tunnel.

Parts of the duct network, hot-air fan, hot-air generator, etc., are placed in an apparatus room on a floor structure above the de-icing tunnel

In the hot-air generator 5, the air is heated by combustion of a combustible fuel, liquefied petroleum gas, natural gas, biogas, process gas, oil, or another combustible fuel.

The in and out passages in the tunnel end portions are provided with air curtains to decrease in-leakage of cold ambient air and out-leakage of hot air during de-icing and are provided with gates for saving heat energy and the possibility of preheating the tunnel to the desired temperature when the tunnel is not used for de-icing. The tunnel has a length that is adapted to give possibility to de-ice bogies, train sets with locomotive and trucks in the stated time. The length of the tunnel allows one or more trucks to be de-iced simultaneously, either by "moving de-icing" or "stationary de-icing" depending on how locomotive and trucks pass through the tunnel. The height of the tunnel is adapted to a suitable height with or without electric aerial line. The width of the tunnel is adapted to the width of the locomotive and trucks including sufficient safety distance to tunnel walls.

Above the de-icing tunnel on an upper storey, an apparatus room is located containing hot-air fan, hot-air generator, and externally heat-insulated air ducts for the distribution of hot air to and from the tunnel. In a surrounding building, a switch gear and operator room are installed in a container.

The tunnel is sectioned into modules, 5-6 m long, having controllable dampers for the possibility of controlling the air flow along locomotive and trucks so as to minimize temperature rise on ice-free surfaces during the course of de-icing.

Due to the requisite power and air flow for the de-icing and in order to decrease the size of gas ducts for supply and exhaust air, the plant has been divided into de-icing modules that can be installed in one or more consecutive modules to decrease the de-icing time.

The flow chart in Fig. 1 shows a de-icing module equal to the length of a bogie, truck, or several trucks installed one after the other.

At the in-passage and out-passage end of the plant, there are gates with air curtains to minimize in-leaking ambient air in the plant.

### Tunnel for the Injection of Hot Air and Evacuation of Return Air

Fig. 2 shows a tunnel with a locomotive and the principle of the injection of hot air and evacuation of cold return air.

### Duct System. Hot-Air Fan

The supply-air and exhaust-air ducts 3, 4 for the injection of hot air and evacuation of exhaust air are connected to a distribution duct for supply air and a distribution duct for exhaust air via each an externally insulated duct having adjustable damper for supply air and negative pressure and flexibles (compensators) for the compensation of length variations of the ducts.

The distribution duct for exhaust air 4 is connected to a hot-air fan 10 to maintain the air flow and pressure in the duct network. The number of revolutions of the hot-air fan is controlled by a frequency converter to maintain a desired flow of hot air to the tunnel. The air flow is measured by a flow sensor that regulates the rotational speed of booster fans.

### Hot-Air Generator

The hot-air generator 5 is installed after the hot-air fan. The hot-air generator 5 contains a number of liquefied petroleum gas-heated duct burners. The hot-air generator 5 is provided with its own control system and high-pressure fan for the combustion air. Fuel flow for the combustion air is controlled by a set value from the control system and temperature sensors in the supply-air flow.

### Gate Curtains

In each end of the de-icing plant, there is a so-called gate curtain having each an air curtain that blows air against the truck sides to prevent the ambient air from being sucked into the evacuation ducts. In the end of the gate curtains, there is a remote controlled hinged door, which normally is closed when de-icing is not carried out. Above the gates, there is installed a flexible wall of electrically insulating material for the passage of aerial line and collector shoe of locomotive and drive trucks. With the gates closed, heating and temperature retention can be effected at reduced flow and power.

### Environmental Aspects

### Purification of "bleed off" air

When return air and in-leaking ambient air are relatively free from dust, there is no need of purification of the air that has to be diverted from the gas duct network.

### Purification of Melt Water

Melt water and condensed steam from water injected into the supply-air ducts run down into the bottom of the rail bed and have to be discharged from the plant to a sewer system.

### Tunnel

- Hot air is blown at high speed in longitudinal slits 3 in tunnel walls and bottom against chassis and bogies of locomotive and trucks and is sucked through the ceiling of the tunnel 1 back to hot-air generator 5 for reheating in a closed air duct network.

### Heating of Air

- Heating of the air for de-icing is effected using combustion of a combustible fuel, liquefied petroleum gas, natural gas, biogas, process gas, oil, or the like in a duct burner of the duct network for the distribution of hot air to a tunnel for de-icing.

### Injection of Water into Hot Air for Increasing De-icing Capacity

- Water is injected by nozzles 11 after the duct burner to increase the moisture content of the hot air so as to then condense against cold surfaces with or without snow and ice with the purpose of increasing the de-icing capacity.

### De-icing of Dressed Ore Using Hot Air

### Brief Functional Description

During the transportation from the loading terminal to the unloading terminal, the moist iron ore concentrate, the dressed ore, will freeze closest to the interior of the ore truck body into a shell the thickness of which varies along the contact surface of the truck body depending on transportation time, ore truck speed and temperature variations along the transport path. The objective of the de-icing of the ore is not to thaw all frozen dressed ore in the truck body but only a thin layer, 3-5 mm closest to the inside of the truck body by blowing hot air on the outside of the truck body.

Ore trucks having frozen dressed ore pass through a tunnel in which hot air is blown at high speed from longitudinal slits in the tunnel walls and between the rail against bottom, sides, and end portions of the bodies containing frozen ore concentrate. Parts of the tunnel walls are provided with refractory ceramic tiles 9 to boost the heat transfer from hot air by heat radiation. When the air has passed the trucks, it is sucked through longitudinal slits in the ceiling of the tunnel, after which the cooled air is recirculated through an insulated duct system back to the hot-air generator to be reheated. In-leaking ambient air in air curtains in the end portions of the tunnel is diverted from the main flow and is cooled by an intermixture of cold ambient air as well as in a heat exchanger by water. After the passage through the heat exchanger, the diverted air is led to a filter in the emptying hall for dust purification.

Parts of the duct network, hot-air fan, hot-air generator, etc., are placed in an apparatus room on a floor structure above the de-icing tunnel.

In the hot-air generator, the air is heated by combustion of liquefied petroleum gas from an LPG tank and an evaporator.

The in and out passages in the tunnel end portions are provided with air curtains to decrease in-leakage of cold ambient air and out-leakage of hot de-icing air during de-icing and are provided with gates for saving heat energy and possibility of preheating the tunnel to the desired temperature when the tunnel is not used for de-icing. The tunnel has a length that is adapted to give possibility of de-icing parts of half a line locomotive. The length of the tunnel allows one or more ore trucks to be de-iced simultaneously, either by "moving unloading" or "stop unloading" depending on how the ore trucks pass through the tunnel. The height of the tunnel is adapted to a suitable height with or without electric aerial line. The width of the tunnel is adapted to the width of the ore trucks including sufficient safety distance to tunnel walls upon possible asymmetric loading of iron concentrate and spring fracture in truck bogies.

Above the de-icing tunnel on an upper storey, an apparatus room is located containing hot-air fan, hot-air generator, and externally heat-insulated air ducts for the distribution of hot air to and from the tunnel. On the ground level inside the surrounding building, a switch gear and operator room are installed in a container. In the same part of the building, there is a heat exchanger for cooling the diverted air installed with connecting ducts from the exhaust-air duct of the plant and to a filter for the purification of dust that is sucked from the trucks.

The plant is installed in a building.

The plant is controlled and monitored by a computer-based process control system.

After the truck emptying plant, there is a laser scanning system installed with the intention to scan the inside of the emptied trucks for checking that most of the iron concentrate has left the truck upon the emptying. If this has not been accomplished, a feedback is made to the process control system to change air temperature, air flow, and/or emptying speed.

### Safety

Since liquefied petroleum gas is a heavy gas and is used as fuel, gas leakage has to be indicated by liquefied petroleum gas leakage sensors placed in the vicinity of the LPG tank, evaporator and inside the apparatus room at the hot-air generator. When a liquefied petroleum gas leakage has been indicated, the gas supply is shut off from the LPG tank by a safety valve, after which an alarm signal for gas alarm begins and the plant is stopped. Before the plant can be started again, the gas leakage has to be located and taken care of.

To ensure that no person has passed into the tunnel in case no ore trucks are present in the tunnel and when the holding of the tunnel begins, a photo-electric trip device is activated, and after which the holding begins and the doors are opened.

### Environmental Aspects

### Purification of Diverted Air from Dust

Since the ore and dust can be released from over the surface of the ore in the truck and from truck chassis and bogie during the de-icing, after cooling in the heat exchanger, the diverted air is sucked to the dust filter for the emptying hall of a duct system. To cool the diverted air to allowed temperature, a thermally operated damper for cooling the diverted air is installed before the heat exchanger.

### Draining of Melt Water from Snow and Ice on Ore Trucks

Water from melted snow and ice on the ore trucks will drip to the bottom of the rail bed foundation and has to be drained to a sewer system.

### Process Control

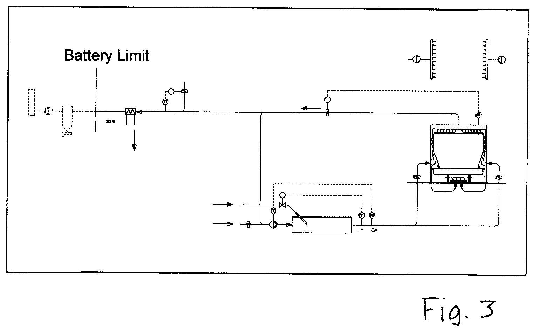

The plant is controlled and monitored by a process control system using measurements and indications of air flows, air temperatures, speed control of hot-air fan, regulation of fuel feed, combustion air and damper, monitoring, alarming, reporting, and communication with superior process control system. The plant can be controlled from a local control desk in the switch gear room as well as from a control desk in a superior process control system. The principle of control and monitoring is shown in Fig. 3

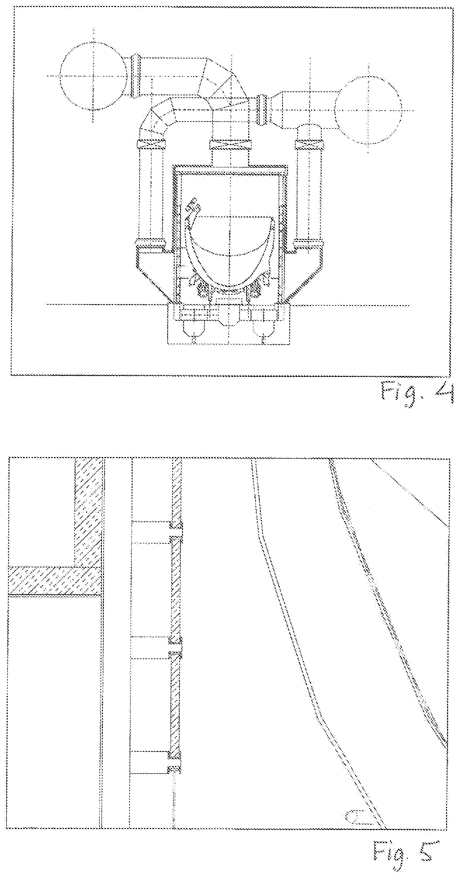

Cross section of a tunnel with ore truck is shown in Fig. 4.

Fig. 5 shows IR tiles 9 of ceramic material between slits for the exhaust of hot air at high speed against the outside of the ore truck. The IR tiles are heated by the hot air on the back side and front side and contribute to the heat transfer by heat radiation.

### Tunnel

1 Hot air is blown at high speed in longitudinal slits in tunnel walls and bottom against truck body containing iron concentrate, ore, or dressed ore and is sucked through the ceiling of the tunnel back to the hot-air generator for reheating in a closed air duct network.
2 Between the air gaps and the other surfaces, the tunnel walls are provided with IR tiles of ceramic material for boosting the heat transfer to the truck body of the ore truck.

### Heating of Air

Heating of the air for de-icing is effected using combustion of a combustible fuel, liquefied petroleum gas, natural gas, biogas, process gas, oil, or the like in a duct burner of the duct network for the distribution of hot air to tunnel for de-icing.

## Claims

1. Device for de-icing railway trucks (1) and/or dressed ore in railway trucks, which device comprises a tunnel (2) provided with a plurality of injection openings (3) for heated air to be used for de-icing and at least one evacuation opening (4) for used air, which device furthermore comprises a hot-air generator (5) that, by supply-air duct means (6), communicates with the injection openings (4), wherein the device furthermore comprises a water supply device arranged for the supply of water to the hot-air generator and/or the supply-air duct means, whereby the hot-air generator (5) is arranged with a capacity to heat the air sufficiently much so that at least a part of the supplied water should be evaporated, **characterized in that**
said at least one evacuation opening (4), through exhaust-air duct means (7), communicates with the hot-air generator (5) for reheating, and that a closed duct system connects said at least one evacuation opening (4), the hot-air generator (5), and the injection openings to each other.

2. Device according to claim 1, **characterized in that** the injection openings comprise elongate slits (3) that run in the longitudinal direction of the tunnel (2), wherein the longitudinal direction is defined as the direction from one tunnel opening to the other.

3. Device according to any one of claim 1 or 2, **characterized in that** the injection openings (4) are arranged in the side walls of the tunnel (2) and/or the bottom of the tunnel (2).

4. Device according to any one of claims 1-3, **characterized in that** the hot-air generator (5) comprises a combustion device arranged for the combustion of fossil fuel, preferably in the form of gas.

5. Device according to any one of claims 1-4, **characterized in that** at least one tunnel opening, preferably both tunnel openings, is provided with a gate curtain that comprises air injection means for forming an air curtain at the respective tunnel opening.

6. Device according to any one of claims 1-5, **characterized in that** it is arranged to impart the air a speed through the exhaust openings in the interval of 15-60 m/s, preferably in the interval of 25-30 m/s.

7. Device according to any one of claims 1-6, **characterized in that** it is dimensioned to impart the air a heating power per unit area in the interval of 4-25 kW/m² upon contact with the railway truck, preferably in the interval of 8-10 kW/m².

8. Device according to any one of claims 1-7, **characterized in that** said at least one evacuation opening comprises a plurality of longitudinal slits arranged in the ceiling of the tunnel.

9. Device according to any one of claims 1-8, **characterized in that** the side walls of the tunnel are at least partly lined with a ceramic material.

10. Device according to any one of claims 1-9, **characterized in that** at least some of the injection openings are provided with dampers for the control of the speed of the air and/or the direction of the air.

11. Device according to any one of claims 1-10, **characterized in that** the tunnel, in the longitudinal direction, is composed of a plurality of building modules, with each module having a length in the interval of 3-10 m, preferably in the interval of 5-6 m.

12. Method for de-icing railway trucks and/or dressed ore in railway trucks, wherein each railway truck is driven into a tunnel and air is heated by a hot-air generator and the heated air is blown through injection openings against the railway trucks, **wherein** water is supplied to the hot-air generator and/or a supply-air means in such a way that it at least partly is evaporated by the same and then goes along with the heated air, **characterized in that** the method is exercised by means of a device according to any one of claims 1-11.

## Patentansprüche

1. Vorrichtung zum Enteisen von Eisenbahnwaggons (1) und/oder aufbereitetem Erz in Eisenbahnwaggons, wobei die Vorrichtung einen Tunnel (2) umfasst, der mit mehreren Einspritzöffnungen (3) für erhitzte Luft, die zum Enteisen zu verwenden ist, und mindestens einer Abluftöffnung (4) für verwendete Luft versehen ist, wobei die Vorrichtung ferner einen Heißluftgenerator (5) umfasst, der, durch Zufuhrluftleitungsmittel (6), mit den Einspritzöffnungen (4) kommuniziert, wobei die Vorrichtung ferner eine Wasserzufuhrvorrichtung umfasst, die für das Zuführen von Wasser zu dem Heißluftgenerator und/oder den Zufuhrluftleitungsmitteln eingerichtet ist, wobei der Heißluftgenerator (5) mit einer Kapazität eingerichtet ist, die Luft ausreichend so sehr zu erhitzen, dass mindestens ein Teil des zugeführten Wassers verdampft werden sollte,
**dadurch gekennzeichnet, dass** die mindestens eine Abluftöffnung (4), durch Abfuhrluftleitungsmittel (7), mit dem Heißluftgenerator (5) zum erneuten Erhitzen kommuniziert, und dass ein geschlossenes Leitungssystem die mindestens eine Abluftöffnung (4), den Heißluftgenerator (5) und die Einspritzöffnungen miteinander verbindet.

2. Vorrichtung nach Anspruch 1,
**dadurch gekennzeichnet, dass** die Einspritzöffnungen längliche Schlitze (3) umfassen, die in der Längsrichtung des Tunnels (2) verlaufen, wobei die Längsrichtung als die Richtung von einer Tunnelöffnung zur anderen definiert ist.

3. Vorrichtung nach einem der Ansprüche 1 und 2,
**dadurch gekennzeichnet, dass** die Einspritzöffnungen (4) in den Seitenwänden des Tunnels (2) und/oder im Boden des Tunnels (2) eingerichtet sind.

4. Vorrichtung nach einem der Ansprüche 1 bis 3,
**dadurch gekennzeichnet, dass** der Heißluftgenerator (5) eine Verbrennungsvorrichtung umfasst, die für die Verbrennung von fossilem Brennstoff eingerichtet ist, vorzugsweise in der Form von Gas.

5. Vorrichtung nach einem der Ansprüche 1 bis 4,
**dadurch gekennzeichnet, dass** mindestens eine Tunnelöffnung, vorzugsweise beide Tunnelöffnungen, mit einem Torvorhang versehen ist, der Lufteinspritzmittel zur Bildung eines Luftvorhangs an der jeweiligen Tunnelöffnung umfasst.

6. Vorrichtung nach einem der Ansprüche 1 bis 5,
**dadurch gekennzeichnet, dass** diese eingerichtet ist, der Luft eine Geschwindigkeit durch die Abfuhröffnungen im Intervall von 15 bis 60 m/s zu verleihen, vorzugsweise im Intervall von 25 bis 30 m/s.

7. Vorrichtung nach einem der Ansprüche 1 bis 6,
**dadurch gekennzeichnet, dass** diese bemessen ist, der Luft eine Heizleistung pro Bereichseinheit im Intervall von 4 bis 25 kW/m² beim Kontakt mit dem Eisenbahnwaggon zu verleihen, vorzugsweise im Intervall von 8 bis 10 kW/m².

8. Vorrichtung nach einem der Ansprüche 1 bis 7,
**dadurch gekennzeichnet, dass** die mindestens eine Abluftöffnung mehrere längliche Schlitze umfasst, die in der Decke des Tunnels eingerichtet sind.

9. Vorrichtung nach einem der Ansprüche 1 bis 8,
**dadurch gekennzeichnet, dass** die Seitenwände des Tunnels mindestens teilweise mit einem Keramikmaterial ausgekleidet sind.

10. Vorrichtung nach einem der Ansprüche 1 bis 9,
**dadurch gekennzeichnet, dass** mindestens einige der Einspritzöffnungen mit Dämpfern zur Steuerung der Geschwindigkeit der Luft und/oder der Richtung der Luft versehen sind.

11. Vorrichtung nach einem der Ansprüche 1 bis 10,
**dadurch gekennzeichnet, dass** der Tunnel, in der Längsrichtung, aus mehreren Baumodulen besteht, wobei jedes Modul eine Länge im Intervall von 3 bis 10 m aufweist, vorzugsweise im Intervall von 5 bis 6 m.

12. Verfahren zum Enteisen von Eisenbahnwaggons und/oder aufbereitetem Erz in Eisenbahnwaggons, wobei jeder Eisenbahnwaggon in einen Tunnel geführt wird und Luft durch einen Heißluftgenerator erhitzt wird und die erhitzte Luft durch Einspritzöffnungen gegen die Eisenbahnwaggons geblasen wird, wobei Wasser dem Heißluftgenerator und/oder einem Zufuhrluftmittel derart zugeführt wird, dass es mindestens teilweise durch denselben verdampft wird und dann gemeinsam mit der erhitzten Luft mitgeht,
**dadurch gekennzeichnet, dass** das Verfahren mittels einer Vorrichtung nach einem der Ansprüche 1 bis 11 durchgeführt wird.

## Revendications

1. Dispositif pour dégivrer des chariots ferroviaires (1) et/ou du minerai concentré dans des chariots ferroviaires, lequel dispositif comprend un tunnel (2) pourvu d'une pluralité d'ouvertures d'injection (3) pour l'air chauffé à utiliser pour dégivrer et d'au moins une ouverture d'évacuation (4) pour l'air d'évacuation, lequel dispositif comprend en outre un générateur d'air chaud (5) qui communique, par un moyen conduit d'air d'alimentation (6), avec les ouvertures d'injection (4), ce dispositif comprenant en outre un dispositif d'alimentation en eau agencé de façon à alimenter de l'eau au générateur d'air chaud et/ou au moyen conduit d'air d'alimentation, moyennant quoi le générateur d'air chaud (5) est pourvu d'une capacité de chauffer l'air suffisamment de telle sorte qu'au moins une partie de l'eau alimentée devrait être évaporée,
**caractérisé en ce que** ladite au moins une ouverture d'évacuation (4) communique, par l'intermédiaire du moyen conduit d'air d'évacuation (7), avec le générateur d'air chaud (5) pour réchauffer, et **en ce qu'**un système de conduit fermé relie ladite au moins une ouverture d'évacuation (4), le générateur d'air chaud (5) et les ouvertures d'injection les uns aux autres.

2. Dispositif selon la revendication 1, **caractérisé en ce que** les ouvertures d'injection comportent des fentes allongées (3) qui s'étendent dans la direction longitudinale du tunnel (2), cette direction longitudinale étant définie comme la direction d'une ouverture du tunnel à l'autre.

3. Dispositif selon l'une quelconque des revendications 1 ou 2, **caractérisé en ce que** les ouvertures d'injection (4) sont disposées dans les parois latérales du tunnel (2) et/ou dans le fond du tunnel (2).

4. Dispositif selon l'une quelconque des revendications 1 à 3, **caractérisé en ce que** le générateur d'air chaud (5) comporte un dispositif de combustion prévu pour la combustion de combustible fossile, de préférence sous la forme de gaz.

5. Dispositif selon l'une quelconque des revendications 1 à 4, **caractérisé en ce qu'**au moins une ouverture du tunnel, de préférence les deux ouvertures du tunnel, est pourvue d'un rideau de porte qui comporte un moyen d'injection d'air pour former un rideau d'air à l'ouverture respective du tunnel.

6. Dispositif selon l'une quelconque des revendications 1 à 5, **caractérisé en ce qu'**il est agencé de façon à imprimer à l'air une vitesse à travers les ouvertures d'évacuation située dans la plage de 15 à 60 m/s, de préférence dans la plage de 25 à 30 m/s.

7. Dispositif selon l'une quelconque des revendications 1 à 6, **caractérisé en ce qu'**il est dimensionné de façon à imprimer à l'air une puissance de chauffage par unité de surface située dans la plage de 4 à 25 kW/m² lors du contact avec le chariot ferroviaire, de préférence dans la plage de 8 à 10 kW/m².

8. Dispositif selon l'une quelconque des revendications 1 à 7, **caractérisé en ce que** ladite au moins une ouverture d'évacuation comporte une pluralité de fentes longitudinales disposées dans le plafond du tunnel.

9. Dispositif selon l'une quelconque des revendications 1 à 8, **caractérisé en ce que** les parois latérales du tunnel sont au moins partiellement revêtues d'un matériau céramique.

10. Dispositif selon l'une quelconque des revendications 1 à 9, **caractérisé en ce qu'**au moins quelques-unes des ouvertures d'injection sont pourvues de registres pour contrôler la vitesse de l'air et/ou la direction de l'air.

11. Dispositif selon l'une quelconque des revendications 1 à 10, **caractérisé en ce que** le tunnel, dans la direction longitudinale, est composé d'une pluralité de modules de construction, chaque module ayant une longueur située dans la plage de 3 à 10 m, de préférence dans la plage de 5 à 6 m.

12. Procédé pour dégivrer des chariots ferroviaires et/ou du minerai concentré dans des chariots ferroviaires, chaque chariot ferroviaire étant conduit dans un tunnel et de l'air étant chauffé par un générateur d'air chaud et l'air chauffé étant soufflé à travers des ouvertures d'injection contre les chariots ferroviaires, de l'eau étant alimentée au générateur d'air chaud et/ou à un moyen d'air d'alimentation de manière à ce qu'elle soit au moins partiellement évaporée par ceux-ci et circule ensuite avec l'air chauffé, **caractérisé en ce que** ce procédé est exécuté au moyen d'un dispositif selon l'une quelconque des revendications 1 à 11.
